# EUROPÄISCHE PATENTSCHRIFT

(11) **EP 1 571 052 B1**
(45) Veröffentlichungstag und Bekanntmachung des Hinweises auf die Patenterteilung: **17.09.2008**
(21) Anmeldenummer: 05004435.3
(22) Anmeldetag: 01.03.2005
(51) Int. Cl.: B60R 21/276, B60R 21/203

(54) **Lenkrad für ein Kraftfahrzeug mit einem Gassackmodul**
Steering wheel for a vehicle with an airbag module
Volant pour un véhicule avec un module d'airbag

(30) Priorität: 05.03.2004 DE 202004003464 U
(43) Veröffentlichungstag der Anmeldung: 07.09.2005
(73) Patentinhaber: TRW Automotive Safety Systems GmbH, 63743 Aschaffenburg (DE)
(72) Erfinder: Schätzmüller-Barajas, Monica, 97846 Partenstein (DE)
(74) Vertreter: Strass, Jürgen

(56) Entgegenhaltungen:
- EP-A- 0 582 335
- DE-U1- 20 107 297
- US-A- 3 843 152
- US-A- 5 398 963

## Beschreibung

Die Erfindung betrifft ein Lenkrad für ein Kraftfahrzeug nach dem Oberbegriff des Anspruchs 1, des Anspruchs 5 und des Anspruchs 6.

Es sind verschiedene Gassackmodule bekannt, bei denen Abströmöffnungen vorgesehen sind. Mit Hilfe der Abströmöffnungen soll insbesondere ein während des Befüllens des Gassacks oder beim Eindringen eines Fahrzeuginsassen in den Gassack möglicher Überdruck im Gassackinneren abgebaut werden.

Aus der EP 0 614 787 A1 ist ein Gassackrückhaltesystem bekannt, bei dem ein kontrolliertes Abströmen des Füllgases durch einen zwischen der Lenkradnabe und einer die Lenkradwelle umgebenden Verteilerkammer gebildeten Dichtspalt ermöglicht wird.

In der DE 100 32 791 A1 und der DE 201 07 297 U1 sind Gassackmodule mit Abströmöffnungen im Gasgeneratorträger gezeigt, die in den Nabenbereich des Lenkrads weisen, um ein Abströmen des Gases in das Modulinnere zu ermöglichen.

Bei den in der DE 299 06 477 U1 gezeigten Gassackmodule sind Abströmöffnungen im Gasgeneratorträger und im Modulgehäuse vorgesehen.

Um die durch die Abströmöffnungen verursachten Stabilitätseinbußen der entsprechenden Bauteile, insbesondere des Gasgeneratorträgers, auszugleichen, müssen diese Bauteile entweder stabiler ausgelegt oder zusätzliche Verstärkungsbauteile eingesetzt werden, wodurch die Kosten für die Bauteile und die Montage steigen.

Aufgabe der Erfindung ist es, ohne zusätzliche Bauteile und ohne zusätzlichen Montageaufwand ein sicheres Abströmen des in den Gassack eingeleiteten Gases zu erreichen.

Zur Lösung dieser Aufgabe sieht die Erfindung ein Lenkrad mit den Merkmalen des Anspruchs 1 vor. Die Aufgabe wird auch durch ein Lenkrad mit den Merkmalen des Anspruchs 5 und durch ein Lenkrad mit den Merkmalen des Anspruchs 6 gelöst. Gemäß der Erfindung sind die Abströmöffnungen nicht (nur) im Gasgeneratorträger, sondern in Bauteilen vorgesehen, die entweder keinen wesentlichen Beitrag zur Stabilität des Gassackmoduls beitragen oder trotz der Abströmöffnungen keiner zusätzlichen Verstärkung bedürfen, so daß kein zusätzlicher Montagevorgang erforderlich ist.

Aufgrund der hohen Temperatur des Gases und möglicherweise vorhandener heißer Partikel ist es vorteilhaft, das abströmende Gas zumindest teilweise in das Innere des Gassackmoduls abzuleiten, d.h. in einen Bereich, der für die Fahrzeuginsassen ungefährlich ist.

Weitere Merkmale und Vorteile der Erfmdung ergeben sich aus der nachfolgenden Beschreibung und aus den beigefügten Zeichnungen, auf die Bezug genommen wird. In den Zeichnungen zeigen:
- Figur 1 eine perspektivische Ansicht eines erfindungsgemäßen Lenkrads mit einem Gassackmodul;
- Figur 2 eine perspektivische Ansicht einer Gassackmodul-Abdeckkappe eines erfindungsgemäßen Lenkrads;
- Figur 3a eine Draufsicht auf ein erfindungsgemäßes Lenkrad ohne Gassackmodul;
- Figur 3b eine schematische Seitenansicht des Lenkrads aus Figur 3a mit Gassackmodul; und
- Figur 4 eine Draufsicht auf einen Gassack eines erfindungsgemäßen Lenkrads.

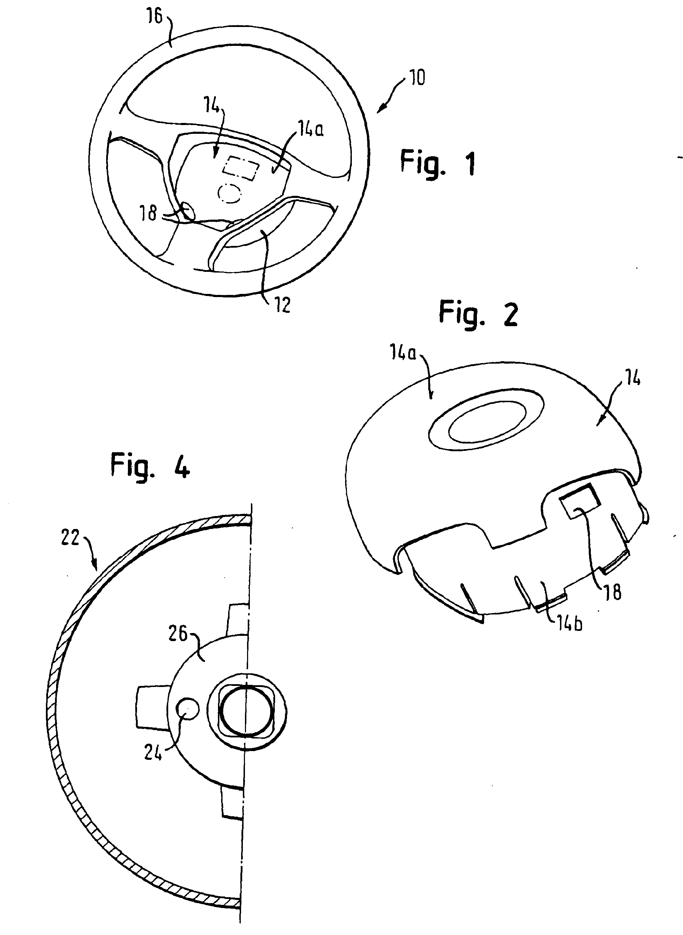

In Figur 1 ist ein Lenkrad 10 mit einem erfindungsgemäßen Gassackmodul 12 dargestellt. Das Gassackmodul 12 umfaßt ein Modulgehäuse mit einer Abdeckkappe 14, die eine dem Fahrer zugewandte Vorderwand 14a aufweist. Im Modulgehäuse sind ein Gasgenerator und ein Gassack untergebracht. Sowohl in der Vorderwand 14a der Abdeckkappe 14 (außerhalb der beim Gassackaustritt aufgeklappten Bereiche) als auch in der Umschäumung 16 des Lenkradskeletts sind an bestimmten Stellen Abströmöffnungen 18 vorgesehen.

Somit kann ein Teil des in den Gassack eingeleiteten Gases über die Abströmöffnungen 18 in das Gassackmodul 12 bzw. in für den Fahrer ungefährliche Bereiche abgeleitet werden, um den Druck im Gassackinneren zu reduzieren.

Bei der in Figur 2 gezeigten Abdeckkappe 14 sind Abströmöffnungen 18 in der umlaufenden Seitenwand 14b angeordnet.

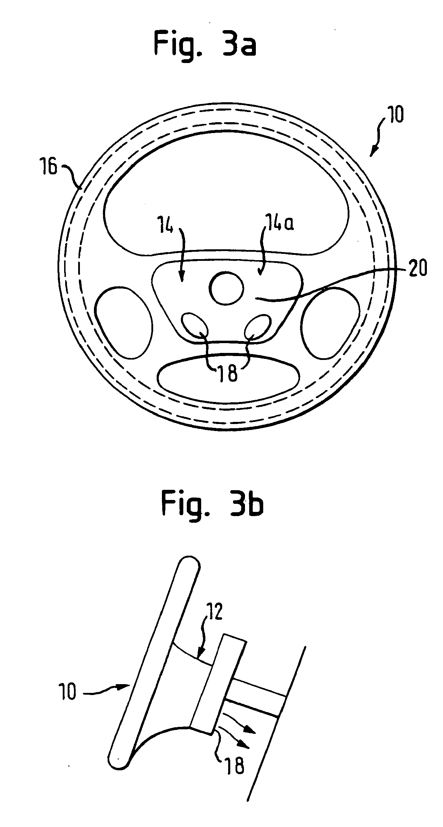

Bei dem in den Figuren 3a und 3b gezeigten Lenkrad 10 sind Abströmöffnungen 18 im Nabenbereich 20 des Lenkrads 10 vorgesehen, durch die ein Teil des Gases abgeleitet werden kann, z.B. in das Innere der Lenkradnabe.

In Figur 4 ist ein Beispiel für einen Gassack 22 eines erfindungsgemäßen Lenkrads 10 dargestellt. Der Gassack 22 weist Ausströmöffnungen 24 im Bereich 26 des Einblasmunds auf, so daß ein Teil des Gases durch die in der Seitenwand 14b gebildeten Abströmöffnungen 18 abgeleitet werden kann.

Die Strömung des abgeleiteten Gases kann innerhalb des Gassackmoduls 12 bzw. des Lenkrads 10 durch geeignete Führungseinrichtungen gezielt beeinflußt werden.

Bei einem erfindungsgemäßen Lenkrad können eine oder mehrere Abströmöffnungen 18 entweder nur in der Vorderwand 14a der Abdeckkappe 14, nur in der Seitenwand 14b der Abdeckkappe 14, oder nur im Nabenbereich 20 des Lenkrads 10 vorgesehen sein, oder es können Abströmöffnungen 18 in mehreren der zuvor genannten Bauteilabschnitte/-bereiche vorgesehen sein.

## Patentansprüche

1. Lenkrad für ein Kraftfahrzeug, mit einem Gassackmodul (12), das ein Modulgehäuse mit einer Abdeckkappe (14) sowie einen Gasgenerator und einen Gassack (22) umfaßt, **dadurch gekennzeichnet, daß** wenigstens eine Abströmöffnung (18) zum Ableiten des vom Gasgenerator erzeugten und in den Gassack (22) eingeleiteten Gases in der Abdeckkappe (14) vorgesehen ist.

2. Lenkrad nach Anspruch 1, **dadurch gekennzeichnet, daß** die Abströmöffnung (18) in einer dem Fahrer zugewandten Vorderwand (14a) der Abdeckkappe (14) angeordnet ist.

3. Lenkrad nach Anspruch 1, **dadurch gekennzeichnet, daß** die Abströmöffnung (18) in einer Seitenwand (14b) der Abdeckkappe (14) angeordnet ist.

4. Lenkrad nach Anspruch 3, **dadurch gekennzeichnet, daß** der Gassack (22) Ausströmöffnungen (24) im Bereich (26) des Einblasmunds des Gassacks (22) aufweist.

5. Lenkrad für ein Kraftfahrzeug, mit einem Lenkradskelett, das von einer Umschäumung (16) umgeben ist, und einem Gassackmodul (12), das einen Gasgenerator und einen Gassack umfaßt, **dadurch gekennzeichnet, daß** wenigstens eine Abströmöffnung (18) zum Ableiten des vom Gasgenerator erzeugten und in den Gassack eingeleiteten Gases in der Umschäumung (16) vorgesehen ist.

6. Lenkrad für ein Kraftfahrzeug mit einer Lenkradnabe und einem Gassackmodul (12), das einen Gasgenerator und einen Gassack umfaßt, **dadurch gekennzeichnet, daß** wenigstens eine Abströmöffnung (18) zum Ableiten des vom Gasgenerator erzeugten und in den Gassack (22) eingeleiteten Gases im Nabenbereich (20) des Lenkrads vorgesehen ist.

7. Lenkrad nach einem der vorhergehenden Ansprüche, **dadurch gekennzeichnet, daß** das durch die Abströmöffnung (18) austretende Gas zumindest teilweise in das Innere des Gassackmoduls (12) abgeleitet wird.

## Claims

1. A steering wheel for a motor vehicle, comprising a gas bag module (12) which includes a module housing having a covering cap (14), and a gas generator and a gas bag (22), **characterized in that** at least one vent opening (18) for diverting the gas generated by the gas generator and introduced into the gas bag (22) is provided in the covering cap (14).

2. The steering wheel according to claim 1, **characterized in that** the vent opening (18) is arranged in a front wall (14a), facing the driver, of the covering cap (14).

3. The steering wheel according to claim 1, **characterized in that** the vent opening (18) is arranged in a side wall (14b) of the covering cap (14).

4. The steering wheel according to claim 3, **characterized in that** the gas bag (22) has outflow openings (24) in the region (26) of the inflation opening of the gas bag (22).

5. A steering wheel for a motor vehicle, comprising a steering wheel skeleton which is surrounded by a foam casing (16), and a gas bag module (12) which includes a gas generator and a gas bag, **characterized in that** at least one vent opening (18) for diverting the gas generated by the gas generator and introduced into the gas bag is provided in the foam casing (16).

6. A steering wheel for a motor vehicle, comprising a steering wheel hub and a gas bag module (12) which includes a gas generator and a gas bag, **characterized in that** at least one vent opening (18) for diverting the gas generated by the gas generator and introduced into the gas bag (22) is provided in the hub region (20) of the steering wheel.

7. The steering wheel according to any of the preceding claims, **characterized in that** the gas escaping through the vent opening (18) is diverted at least partly into the interior of the gas bag module (12).

## Revendications

1. Volant de direction pour un véhicule automobile, comportant un module de coussin à gaz (12) qui comprend un boîtier de module et un couvercle (14) ainsi qu'un générateur de gaz et un coussin à gaz (22), **caractérisé en ce qu'**il est prévu au moins un orifice d'écoulement (18) pour dériver dans le couvercle (14) le gaz engendré par le générateur de gaz et introduit dans le coussin à gaz (22).

2. Volant de direction selon la revendication 1, **caractérisé en ce que** l'orifice d'écoulement (18) est agencé dans une paroi antérieure (14a) du couvercle (14), qui est tournée vers le conducteur.

3. Volant de direction selon la revendication 1, **caractérisé en ce que** l'orifice d'écoulement (18) est agencé dans une paroi latérale (14b) du couvercle (14).

4. Volant de direction selon la revendication 3, **caractérisé en ce que** le coussin à gaz (22) présente des orifices d'échappement (24) dans la région (26) de l'embouchure d'insufflation du coussin à gaz (22).

5. Volant de direction pour un véhicule automobile, comportant un squelette de volant de direction, qui est entouré par un enrobage de mousse (16), et un module de coussin à gaz (12) qui comprend un générateur de gaz et un coussin à gaz, **caractérisé en ce qu'**il est prévu au moins un orifice d'écoulement (18) pour dériver dans l'enrobage de mousse (16) le gaz engendré par le générateur de gaz et introduit dans le coussin à gaz.

6. Volant de direction pour un véhicule automobile, comportant un moyeu de volant de direction et un module de coussin à gaz (12) qui comprend un générateur de gaz et un coussin à gaz, **caractérisé en ce qu'**il est prévu au moins un orifice d'écoulement (18) pour dériver dans la région de moyeu (20) du volant de direction le gaz engendré par le générateur de gaz et introduit dans le coussin à gaz (22).

7. Volant de direction selon l'une des revendications précédentes, **caractérisé en ce que** le gaz sortant à travers l'orifice d'écoulement (18) est dérivé au moins partiellement dans l'intérieur du module de coussin à gaz (12).
